# EUROPEAN PATENT APPLICATION

(11) **EP 3 719 940 A1**
(43) Date of publication of application: **07.10.2020**
(21) Application number: 18882482.5
(22) Date of filing: 22.06.2018
(51) Int. Cl.: H01R 13/72

(54) **CHARGING PILE**

(30) Priority: 28.11.2017 CN 201721615232 U
(71) Applicant: NIO Nextev Limited, Central, Hong Kong (HK)
(72) Inventor: XIA, Lijian, Central Hong Kong (CN); ZHAO, Zhiling, Central Hong Kong (CN)
(74) Representative: Vossius & Partner Patentanwälte Rechtsanwälte mbB
(86) International application number: PCT/CN2018/092314
(87) International publication number: WO 2019/105020

(57) **Abstract**

A charging pile (100), comprising: a body (101); a winding portion (102) attached to the body (101) and protruding from the body (101); and a cover (103) removably attached to the winding portion (102) and having a hole (104), wherein the contour of an edge (103a) of the cover (103) is geometrically similar to the contour of the winding portion (102) and is larger in size than the contour of the winding portion (102). The charging pile (100) has the advantages of having a simple structure, being easy to manufacture and install, etc.; and a charging gun (200) and a charging wire (210) can be properly placed, and the charging wire (210) can be prevented from heaping up in an undesired position.

## Description

### Technical Field

The invention relates to the field of charging pile structures, and more particularly, to a charging pile adapted to properly place a charging gun and a charging wire.

### Background Art

It is known that electric vehicles usually require a charging pile for charging. National standards have defined the structure of the charging pile. The structural requirements of the charging pile in the most commonly used C-type connection manner are: a charging gun wire is fixed to the charging pile, and the charging gun wire is part of the charging pile. The electric vehicle is charged by connecting a charging gun to a charging port in the electric vehicle.

The charging gun wire typically has a length of 3-5 meters or 7-10 meters. Therefore, when the charging gun is not in use, it is necessary to suitably house the charging gun wire and the charging gun. Some charging pile structures have been proposed in the prior art, for example, a gun insertion position is provided on a pile body for inserting the charging gun; and a gun insertion position and a winding position are provided outside the pile body.

However, the existing charging pile design lacks integrity, which complicates the problems of gun insertion and winding. In addition, the installation of the existing charging pile often requires the entire opening of the pile body to perform a connection operation of a power wire, which is not only cumbersome to operate, but also prone to breaking the product seal.

Therefore, there is a continuing need for a new charging pile, and it is desirable that the charging pile can solve at least one of the problems described above.

### Summary of the Invention

One object of the invention is to provide a charging pile, which aims to provide the proper placement of a charging gun and a charging wire.

The objects of the invention are achieved by the following technical solution:
a charging pile, comprising:
a body;
a winding portion attached to the body and protruding from the body; and
a cover removably attached to the winding portion and having a hole, wherein the contour of an edge of the cover is geometrically similar to the contour of the winding portion and is larger in size than the contour of the winding portion.

Optionally, the contour of the winding portion is configured as a circle, an ellipse, a rectangle, a rounded rectangle, or a combination thereof.

Optionally, the cover is attached to the winding portion via one or more bolts or screws.

Optionally, the winding portion is configured to be hollow, and the cover and the winding portion together enclose a cavity.

Optionally, the winding portion is internally provided with a charging gun interface corresponding to the hole and configured to house a charging gun.

Optionally, a power wire and a wiring terminal are provided in the cavity, wherein the wiring terminal is electrically connected to a charging power source.

Optionally, the wiring terminal is fixed in place via a bolt or screw.

Optionally, the charging gun is configured to adapt to be inserted through the hole, and is received and fixed by the charging gun interface.

Optionally, one end of a charging wire is attached to the body and the other end thereof is attached to the charging gun, wherein a middle portion of the charging wire is configured to adapt to be wound around the winding portion and is located in a space enclosed by the edge of the cover, the winding portion and the body.

Optionally, the hole is provided at an upper portion of the cover.

The charging pile of the invention has the advantages of having a simple structure, being easy to manufacture and install, etc.; and a charging gun and a charging wire can be properly placed, and the charging wire can be prevented from heaping up in an undesired position.

### Brief Description of the Drawings

The invention will be further described in detail below in conjunction with the accompanying drawings and preferred embodiments. However, those skilled in the art would appreciate that the drawings are drawn merely for the purpose of illustrating the preferred embodiments and therefore should not be taken as limiting the scope of the invention. In addition, unless otherwise specified, the drawings are merely intended to be conceptually illustrative of the constitution or construction of the described objects and may include exaggerated representations, and the drawings are not necessarily drawn to scale.
Fig. 1 is a perspective view of an embodiment of a charging pile of the invention.
Fig. 2 is a front view of a lower portion of the embodiment shown in Fig. 1.
Fig. 3 is an exploded perspective view of the lower portion of the embodiment shown in Fig. 1.
Fig. 4 is a front view of the internal structure of the embodiment shown in Fig. 2.
Fig. 5 is a perspective view of the embodiment shown in Fig. 1 in use.

### Detailed Description of Embodiments

The preferred embodiments of the invention will be described below in detail with reference to the accompanying drawings. It will be appreciated by those skilled in the art that these descriptions are merely illustrative and exemplary, and should not be construed as limiting the scope of the invention.

First of all, it should be noted that the orientation terms, such as top, bottom, upward and downward, referred to herein are defined with respect to the directions in the drawings, and they are relative concepts and can thus vary depending on their different locations and different practical states. Therefore, these or other orientation terms should not be construed as limiting terms.

In addition, it should also be noted that any single technical feature described or implied in the embodiments herein, or any single technical feature shown or implied in the drawings, or their equivalents can be further combined with one another, so as to obtain other embodiments of the invention which are not directly mentioned herein.

It should be noted that in different drawings, the same reference numerals denote the same or substantially the same components.

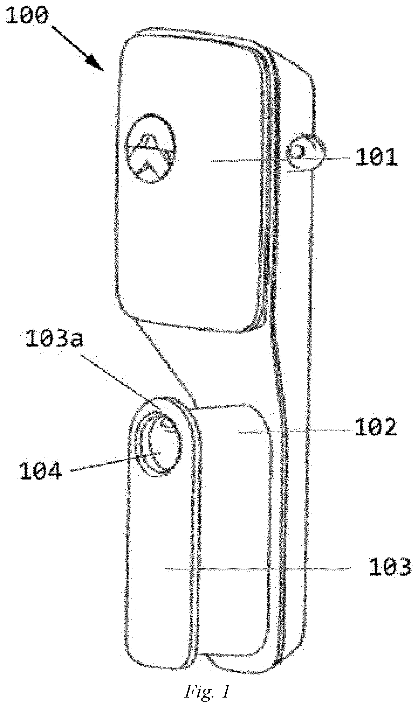

Fig. 1 is a perspective view of an embodiment of a charging pile of the invention. The charging pile 100 comprises: a body 101; a winding portion 102 attached to the body 101 and protruding from the body 101; a cover 103 removably attached to the winding portion 102 and having a hole 104, wherein the contour of an edge 103a of the cover 103 is geometrically similar to the contour of the winding portion 102 and is larger in size than the contour of the winding portion 102.

Optionally, the winding portion 102 is arranged at a lower portion of the body 101.

Optionally, the hole 104 is provided at an upper portion of the cover 103.

Optionally, the contour of the winding portion 102 is configured as a circle, an ellipse, a rectangle, a rounded rectangle, or a combination thereof.

Optionally, the winding portion 102 is configured to be hollow, and the cover 103 and the winding portion 102 together enclose a cavity 110.

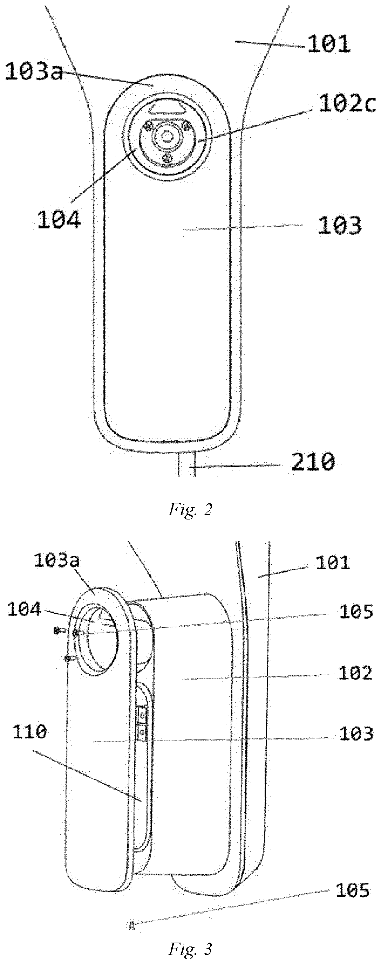

Fig. 2 is a front view of a lower portion of the embodiment shown in Fig. 1. The winding portion 102 is shielded by the cover 103.

Optionally, the winding portion 102 is internally provided with a charging gun interface 102c corresponding to the hole 104 and configured to house a charging gun.

Optionally, one end of a charging wire 210 is attached to the body 101 and extends from the lower portion of the body 101.

Fig. 3 is an exploded perspective view of the lower portion of the embodiment shown in Fig. 1. The cover 103 is attached to the winding portion 102 via one or more bolts or screws 105 and covers the cavity 110.

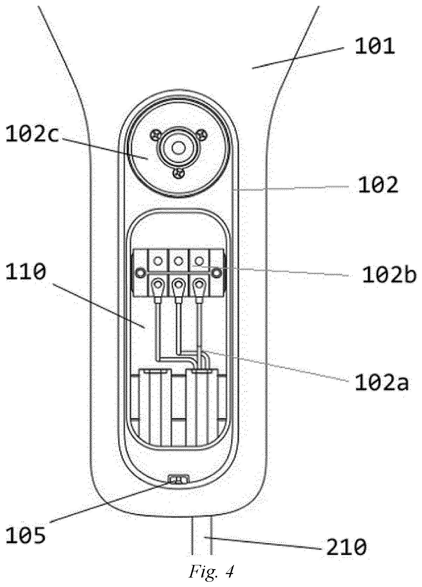

Fig. 4 is a front view of the internal structure of the embodiment shown in Fig. 2. A power wire 102a and a wiring terminal 102b are provided in the cavity 110.

Optionally, the wiring terminal 102b is electrically connected to an electric vehicle charging power source not shown.

Optionally, the wiring terminal 102b is fixed in place via a bolt or screw.

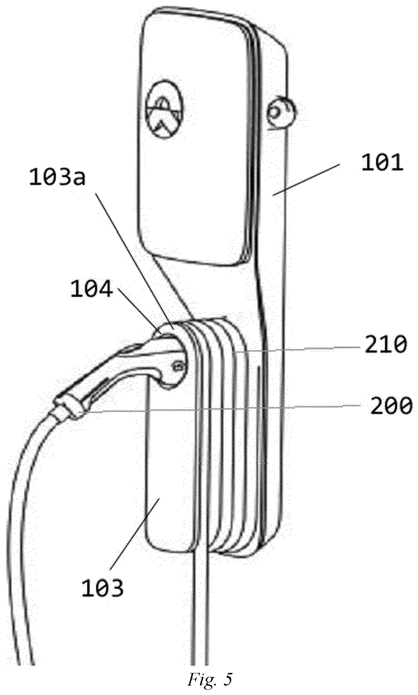

Fig. 5 is a perspective view of the embodiment shown in Fig. 1 in use. The charging gun 200 is configured to adapt to be inserted through the hole 104, and is received and fixed by the charging gun interface 102c not shown. One end of the charging wire 210 is attached to the body 101, and the other end thereof is attached to the charging gun 200. A middle portion of the charging wire 210 is configured to adapt to be wound around the winding portion 102 and is located in a space enclosed by the edge 103a of the cover 103, the winding portion 102 and the body 101.

By using the charging pile of the invention, the charging gun 200 and the charging wire 210 can be respectively fixed in place, and the charging wire will not be dragged on the ground. This design effectively guarantees the proper placement of a charging wire and a charging gun and reduces the risk of causing damage to the charging wire and the charging gun.

In addition, by using the charging pile of the invention, when the power wire is installed and serviced, only the cover 103 needs to be removed for operation, without damaging the sealing structure of the body 101, thus effectively improving the work efficiency and reducing the possibility of causing damage to the body 101.

According to the above disclosure, those skilled in the art can easily install the charging pile of the invention on a charging station.

The invention is disclosed in this description with reference to the accompanying drawings, and those skilled in the art would be able to practice the invention, including manufacturing and using any device or system, selecting suitable materials, and using any combined methods. The scope of the invention is defined by the claimed technical solutions, and includes other examples conceivable by those skilled in the art. So long as such other examples include structural elements that do not differ from the literal language of the claimed technical solutions or such other examples include equivalent structural elements which are not substantially different from the literal language of the claimed technical solutions, such other examples should be considered to be within the scope of protection as determined by the claimed technical solutions of the invention.

## Claims

1. A charging pile, **characterized by** comprising:
a body;
a winding portion attached to the body and protruding from the body; and
a cover removably attached to the winding portion and having a hole, wherein the contour of an edge of the cover is geometrically similar to the contour of the winding portion and is larger in size than the contour of the winding portion.

2. The charging pile according to claim 1, **characterized in that** the contour of the winding portion is configured as a circle, an ellipse, a rectangle, a rounded rectangle, or a combination thereof.

3. The charging pile according to claim 1, **characterized in that** the cover is attached to the winding portion via one or more bolts or screws.

4. The charging pile according to claim 3, **characterized in that** the winding portion is configured to be hollow, and the cover and the winding portion together enclose a cavity.

5. The charging pile according to claim 4, **characterized in that** the winding portion is internally provided with a charging gun interface corresponding to the hole and configured to house a charging gun.

6. The charging pile according to claim 4, **characterized in that** a power wire and a wiring terminal are provided in the cavity, wherein the wiring terminal is electrically connected to a charging power source.

7. The charging pile according to claim 6, **characterized in that** the wiring terminal is fixed in place via a bolt or screw.

8. The charging pile according to claim 5, **characterized in that** the charging gun is configured to adapt to be inserted through the hole, and is received and fixed by the charging gun interface.

9. The charging pile according to claim 6, **characterized in that** one end of a charging wire is attached to the body and the other end thereof is attached to the charging gun, wherein a middle portion of the charging wire is configured to adapt to be wound around the winding portion and is located in a space enclosed by the edge of the cover, the winding portion and the body.

10. The charging pile according to any one of claims 1-9, **characterized in that** the hole is provided at an upper portion of the cover.
